# EUROPEAN PATENT APPLICATION

(11) **EP 4 699 816 A1**
(43) Date of publication of application: **25.02.2026**
(21) Application number: 25191592.2
(22) Date of filing: 24.07.2025
(51) Int. Cl.: B60C 9/22

(54) **TIRE WITH PLY STRIP BELT**

(30) Priority: 13.08.2024 US 202418802379
(71) Applicant: The Goodyear Tire & Rubber Company, Akron, OH 44316 (US)
(72) Inventor: KRIER, Roland Willibrord, 6622 Wasserbillig (LU); NICOLAS, Florian, 7750 Colmar-Berg (LU); Rosca, Costel, 7750 Colmar-Berg (LU); MAUS, Peter Cornelius, 4760 Bullingen (BE); MULLER, Philippe Joseph Auguste, 6971 Champlon (BE); JOUBERT, Paul Benoit, 2714 Luxembourg (LU); MANOGARAN, Arun Prasath, 7740 Colmar-Berg (LU)
(74) Representative: Kutsch, Bernd

(57) **Abstract**

A tire (1) is disclosed comprising a circumferentially extending tread portion (20) and a belt portion (10) arranged radially inwards the tread portion (20). The belt portion (10) comprises at least one belt (100) formed by a plurality of ply strips (110, 120, 130). In one aspect, at least one of the ply strips (110, 120, 130) has a different starting point in the circumferential direction of the tire (1) than any other of the ply strips (110, 120, 130). In another aspect, each of the ply strips (110, 120, 130) has a staggered starting point in the circumferential direction of the tire (1) with respect to the other ply strips (110, 120, 130), preferably a staggered starting point at a first angular increment. In yet another aspect, each of the ply strips (110, 120, 130) is spirally wound about an axis of rotation of the tire (1) and each of the ply strips (110, 120, 130) has a first end, each of said first ends being staggered along a circumferential direction of the tire (1) and spaced apart from each other.

## Description

### Field of the Invention

The present invention is directed to a tire, preferably a pneumatic tire, comprising a circumferential tread portion and a circumferential belt portion arranged radially inwards the tread portion wherein at least one belt of the belt portion comprises a plurality of ply strips.

### Background of the Invention

Belt portions of tires have continuously been improved over the past decades. For instance, various advanced designs of belt portions have been suggested to improve tire durability. However, despite such developments, there is still room for improvement left, particularly for further improving tire durability, such as at lateral edges of the belt portions.

### Summary of the Invention

The invention relates to a tire in accordance with claim 1.

Dependent claims refer to preferred embodiments of the invention.

In a first aspect preferred of the present invention, the invention is directed to a tire comprising a circumferential tread portion and a circumferential belt portion arranged radially inwards the tread portion, wherein the belt portion comprises multiple belts, and wherein at least one of the belts is formed by a plurality of ply strips. Each ply strip of the plurality of ply strips comprises an elastomer composition reinforced by one or more elongated reinforcement elements extending in parallel to a length of the respective strip, wherein each ply strip of the plurality of ply strips has an angle with a circumferential direction of the tire within a range of 6° to 14°.

In a second preferred aspect of the present invention, the invention is directed to a tire comprising a circumferential tread portion and a circumferential belt portion arranged radially inwards the tread portion, wherein the belt portion comprises multiple belts, and wherein at least one of the belts is formed by a plurality of ply strips. Each ply strip of the plurality of ply strips comprises an elastomer composition reinforced by one or more elongated reinforcement elements extending in parallel to a length of the strip, wherein each ply strip of the plurality of ply strips has an angle of at most 15° with a circumferential direction of the tire, and wherein at least one strip end of each ply strip of the plurality of ply strips is located at one lateral edge of the at least one of the belts.

In a third preferred aspect of the present invention, the invention is directed to a tire comprising a circumferential tread portion and a circumferential belt portion arranged radially inwards the tread portion, wherein the belt portion comprises multiple belts, and wherein at least one of the belts is formed by a number of n ply strips, with n being an integer larger than 2. Each of the n ply strips comprises an elastomer composition reinforced by one or more elongated reinforcement elements extending in parallel to a length of the strip, and wherein each of the n ply strips is spirally wound about an axis of rotation of the tire, and has a first strip end located at a first lateral side of the at least one of the belts, so that the n ply strips have n first strip ends located at the first lateral side of the at least one of the belts.

### Brief Description of the Drawings

The invention will be described by way of example and with reference to the accompanying drawings in which:
FIG. 1 is a schematic cross-section of a truck tire in accordance with an embodiment of the present invention;
FIG. 2 is a schematic cross-section of a ply strip as present in the belt portion of the tire of Figure 1;
FIG. 3 is a schematic view of an arrangement of multiple ply strips spirally wound about an axis of rotation of a tire, in accordance with an embodiment of the present invention;
FIG. 4 is a schematic view of another arrangement of multiple ply strips wound about an axis of rotation of a tire, in accordance with another embodiment of the present invention; and
FIG. 5 is a schematic and partially transparent top view of one strip of the ply strips shown already in Figure 4.

### Detailed Description of Preferred Embodiments of the Invention

In accordance with the first aspect of the invention, the tire comprises a circumferential tread portion and a circumferential belt portion arranged radially inwards (or, in other words, radially below) the tread portion, wherein the belt portion comprises multiple belts, and wherein at least one of the belts is formed by a plurality of ply strips, or in other words, belt ply strips. Each ply strip of the plurality of ply strips comprises an elastomer composition, preferably a rubber composition, reinforced by one or more elongated reinforcement elements extending in parallel to a length of the respective strip, wherein each ply strip of the plurality of ply strips has an angle with a circumferential direction of the tire within a range of 6° to 14°. In other words, the elongated reinforcement elements have an angle with a circumferential direction of the tire within a range of 6° to 14°, and/or the length of each ply strip of the plurality of ply strips has an angle with a circumferential direction of the tire within a range of 6° to 14°.

It has been found that such an angle range, avoiding almost parallel orientations with the circumferential direction of the tire, is advantageous in some belt configurations, and helps to further improve durability of the belt portions, particularly at the belt edges. For instance, forces on individual cords can be reduced by avoiding almost straight circumferential portions.

In one embodiment, the angle is within a range of 10° to 14°, preferably between 10° and 13°.

In another preferred embodiment, each ply strip of the plurality of ply strips has a width within a range of 0.5 cm to 10 cm. The width of a ply strip is measured perpendicularly to its length, or in other words its elongated extension, particularly perpendicularly to the elongated extension of the elongated reinforcement elements (which are parallel to the length of the strip and/or its elongated extension).

In still another preferred embodiment, each ply strip of the plurality of ply strips is one or more of: wound (preferably, spirally wound and/or wound with said angle) about an axis of rotation of the tire, preferably with at least two (360°) windings; having a width within a range of 0.5 cm to 2.5 cm; comprising from 1 to 6 of the elongated reinforcement elements, having a thickness within a range of 0.5 mm to 3.5 mm, preferably from 1 mm to 3 mm.

In still another preferred embodiment, each ply strip of the plurality of ply strips is spirally wound (e.g., multiple times) about an axis of rotation of the tire from a first lateral (or axially outer) belt edge to a second lateral (or axially outer) belt edge of the at least one of the belts, wherein the second lateral (or axially outer belt edge) is axially opposite to the first lateral belt edge.

In still another preferred embodiment, each ply strip of the plurality of ply strips is one or more of: having a width within a range of 4 cm (preferably, of 5 cm) to 10 cm; having a cord density of 6 ends per inch (EPI) to 25 EPI (along the width of the strip), or, preferably, of 8 EPI to 15 EPI; extending from a first lateral edge of the at least one of the belts to a second lateral edge of the at least one of the belts, which is axially opposite to the first lateral edge; and wound about an axis of rotation of the tire by at least 360°, and/or with said angle. In addition, or alternatively, one or more ply strips (preferably each ply strip) of the plurality of ply strips have essentially a parallelogram shape, optionally having two parallel long sides and two parallel end (and/or short) sides, wherein the parallel long sides extend along the length of the strip, and/or the parallel end sides are essentially parallel to (or extend essentially in parallel to) the circumferential direction, and/or are provided at each lateral edge of the at least one of the belts. Optionally, said parallelogram shape has an aspect ratio (of lengths) of one of its parallel end sides to one of its parallel long sides of at most 1:3.5, or at most 1:4. In addition, or alternatively, each ply strip has a thickness within a range of 0.5 mm to 3.5 mm, preferably of 1 mm to 3 mm. In another option, circumferentially (directly) neighboring ply strips of the plurality of ply strips overlap and/or are one or more of cured and/or glued to each other.

In still another preferred embodiment, each ply strip has one strip end being located at one (or the same) lateral side of the belt portion and/or edge of the belt, wherein the strip ends of the ply strips located at one lateral side of the belt portion and/or edge of the belt are optionally staggered along a circumferential direction of the tire.

In still another preferred embodiment, the strip ends of ply strips located at one lateral side of the belt portion are circumferentially spaced apart from one another.

In still another preferred embodiment, the elongated reinforcement elements are one or more of wires and cords, preferably one or more of metal wires and metal cords. A preferred metal is steel, which is optionally brass coated.

In still another preferred embodiment, the ply strip has a density of parallel reinforcement elements ranging from 10 ends per inch (EPI) to 20 EPI, e.g., measured perpendicular to an elongated extension of the strip and/or perpendicular to an elongated extension of the reinforcement elements.

In still another preferred embodiment, said belts are arranged (radially) on top of one another, and/or stacked.

In still another preferred embodiment, the working belts have a density of parallel reinforcement elements ranging from 8 EPI to 15 EPI, preferably from 10 EPI to 14 EPI, measured perpendicularly to an elongated extension of the reinforcement elements.

In still another preferred embodiment, the tire is a pneumatic tire, optionally further comprising one or more of: a pair of axially opposite bead portions; a pair of sidewalls, wherein each of the sidewalls extends on one lateral side of the tire from the tread portion to a respective one of the bead portions; and at least one carcass ply extending from one of the bead portions to another one of the bead portions. Preferably, the belt portion is arranged radially between the tread portion and the at least one carcass ply in a crown region of the tire, and/or the belt portion further comprises a pair of working belts, and said at least one of the belts formed by the plurality of ply strips is preferably arranged radially between the working belts of the pair of working belts. Optionally, the at least one belt can be mentioned as an intermediate belt arranged between the working belts of the pair of working belts.

In still another preferred embodiment, the at least one of the belts, or the intermediate belt, has a (maximum) axial width of at least 50%, preferably at least 60%, or even more preferably at least 70% of the axially largest working belt. Optionally, the at least one of the belts, or the intermediate belt, has a (maximum) axial width of at most 95%, preferably at most 80% of the axial width of the axially largest working belt. Preferably, the axially largest working belt is the radially inner working belt of the pair of working belts. In addition, or alternatively, a (maximum) axial width of the at least one of the belts, or the intermediate belt, is at least 5% larger (and/or at most 20%, or at most 10% larger) than a width of a top belt, if present.

In still another preferred embodiment, each working belt has a plurality of parallel elongated reinforcement elements (such as one or more of cords and wires, preferably one or more of metal cords and metal wires), wherein the elongated reinforcement elements have an angle with the circumferential direction within a range of 15° to 50°, optionally with an opposite angular orientation with the circumferential direction. In other words, one of the working belts optionally has parallel elongated reinforcement elements which have an angle within a range of +15° to +50° with the circumferential direction and the other one of the working belts optionally has parallel elongated reinforcement elements which have an angle within a range of -15° to -50° with the circumferential direction.

In still another preferred embodiment, a difference between i) an absolute value of the angle of the reinforcement elements of the first working belt and ii) an absolute value of the angle of the reinforcement elements of the second working belt, is at least 2° (preferably at least 3° and/or at most 15°, or at most 8°, or only at most 6°). Preferably, the radially innermost working belt has the larger absolute angle. For instance, it is preferred to have this angle closer to an angle of an/the at least one carcass ply, which has preferably an angle of 90° with the circumferential direction. Preferably, the belt portion is devoid of a transition belt in such an embodiment between the radially innermost working belt and the adjacent carcass ply, which is provided radially below said innermost working belt.

In still another preferred embodiment, the at least one of the belts is arranged radially between both working belts. In other words, the pair of working belts comprises a radially outer working belt and a radially inner working belt and the at least one of the belts is arranged radially between these two working belts. In addition, or alternatively, the at least one of the belts can be mentioned as intermediate belt or as low angle belt. A radially inner working belt can be described as first working belt and a radially outer working belt can be described as second working belt.

In still another preferred embodiment, the belt portion further comprises a top belt arranged radially above the pair of working belts, and/or radially above a radially outer working belt of the pair of working belts.

In yet another preferred embodiment, the tire further comprises a transition belt arranged radially below the pair of working belts. Optionally, the transition belt comprises parallel reinforcement elements having an angle within a range of 35° to 90° (preferably, of 50° to 90°, or more preferably of 50° to 75°) with the circumferential direction of the tire. Preferably, the transition belt is axially narrower than each of the working belts and the at least one of the belts, or the intermediate belt, respectively.

In still another preferred embodiment, one or more of the belts of the pair of working belts, a top belt and a transition belt are reinforced by a plurality of parallel reinforcement elements, such as cords.

In still another preferred embodiment, one or more of the top belt, the first working belt, the second working belt, the transition belt and the intermediate belt extend (preferably continuously, and/or transversely to the radial direction or to an equatorial plane of the tire) from a position radially below a first shoulder portion of the tread portion to another position radially below a second shoulder portion of the tread portion. In addition, or alternatively, both axially outer edges of one or more of the belts are essentially symmetric with respect to an equatorial plane of the tire.

In still another preferred embodiment, the tire comprises one of i) four belts (i.e., one top belt, two working belts, and one intermediate belt) and ii) five belts (i.e., one top belt, two working belts, one intermediate belt, and a transition belt).

In still another preferred embodiment, the tire is one or more of: a pneumatic radial truck tire; one of a 17.5, 19.5, 22.5 and a 24.5 inch tire (wherein a 22.5 inch tire is preferred); and a tire having at least one steel reinforced carcass ply. 1 inch = 2.54 cm.

In still another preferred embodiment, each ply strip of the plurality of ply strips is wound (preferably spirally wound) about an axis of rotation of the tire with at least one (preferably at least two) full (or 360°) windings (or revolutions). However, this shall not be understood as being only limited to full multiples of 360°. For instance, at least two full or 360° windings would also cover windings with 750°, or at least one full winding would also cover 380°. In addition, or alternatively, each ply strip is spirally wound about an axis of rotation of the tire, and is axially or laterally spaced apart from itself. In other words, upon a 360° winding, the strip does not touch or contact itself axially itself, e.g., with a previous winding or revolution.

In still another preferred embodiment, the at least one of the belt plies comprises from 4 to 10, preferably from 4 to 8 of the ply strips, which are preferably spirally wound about the axis of rotation of the tire.

In still another preferred embodiment, each ply strip of the plurality of ply strips has an angle with the circumferential direction of the tire within a range of 6° to 9°.

According to the second preferred aspect of the invention, the tire comprises a circumferential tread portion and a circumferential belt portion arranged radially inwards the tread portion, wherein the belt portion comprises multiple belts, and wherein at least one of the belts is formed by a plurality of ply strips (or, in other words, belt ply strips). Each ply strip of the plurality of ply strips comprises an elastomer composition reinforced by one or more elongated reinforcement elements extending in parallel to a length (or elongated extension) of the strip, wherein each ply strip of the plurality of ply strips has an angle of at most 15°, preferably of at most 14°, with a circumferential direction of the tire (or, in other words, between its elongated extension or length and a circumferential direction of the tire), and wherein at least one strip end of each ply strip of the plurality of ply strips is located at one lateral edge (or side) of the at least one of the belts.

In one embodiment, each ply strip of the plurality of ply strips has said angle with the circumferential direction within a range of 1° to 15°, preferably from 2° to 14° or even more preferably from 4° to 14°, or from 6° to 14°, or from 6° to 9°.

In another preferred embodiment, each ply strip of the plurality of ply strips has two strip ends comprising a first strip end and a second strip end, and wherein the first strip end of each ply strip is located at a first lateral edge of the at least one of the belts and the second strip end of each ply strip is located at a second lateral edge of the at least one of the belts, wherein the second lateral edge is axially opposite to the first lateral edge.

In still another preferred embodiment each ply strip of the plurality of ply strips is one or more of: spirally wound (e.g., multiple times) about an axis of rotation of the tire; having a width within a range of 0.5 cm to 2.5 cm; comprising from 1 to 6 elongated reinforcement elements in the form of brass coated steel cords; and having a thickness within a range of 0.5 mm to 3.5 mm, preferably from 1 mm to 3 mm.

In still another preferred embodiment, the at least one of the belts comprises at least three, preferably at least four, of the plurality of ply strips.

In still another preferred embodiment, each ply strip of the plurality of ply strips is (preferably spirally) wound (with said angle) about an axis of rotation of the tire by at least 270°, or preferably by at least 330°, or even more preferably by at least 360°, or by at least 365°, or by at least 720°.

In still another preferred embodiment, the at least one of the belts comprises from 4 to 20 of the plurality of ply strips. In addition, or alternatively, the strip ends of the plurality of ply strips are staggered at each belt edge along the circumferential direction.

In still another preferred embodiment, circumferentially neighboring strip ends at each lateral edge of the belt are spaced apart from one another.

In accordance with the third preferred aspect of the invention, a tire comprises a circumferential tread portion and a circumferential belt portion arranged radially inwards the tread portion, wherein the belt portion comprises multiple belts, and wherein at least one of the belts is formed by a number of n ply strips (or belt ply strips), with n being an integer larger than 2 (preferably, larger than 3). Each of the n ply strips comprises an elastomer composition (preferably a rubber composition) reinforced by one or more elongated reinforcement elements extending in parallel to a length of the strip, wherein each of the n ply strips is spirally (or helically) wound about an axis of rotation of the tire, and has a first strip end located at a first lateral side (or edge) of the at least one of the belts, so that the n ply strips have n first strip ends located at the first lateral side (or edge) of the at least one of the belts.

Having multiple ply strips spirally wound about an axis of rotation of the tire and multiple strip ends starting at a belt edge can help to improve the durability of the belt portions, particularly at the belt edge.

In one embodiment, the n first strip ends are staggered along a circumferential direction of the tire.

In another preferred embodiment, the n first strip ends are spaced apart from each other along a circumferential direction of the tire. In other words, circumferentially neighboring strip ends do not touch each other.

In still another preferred embodiment, said multiple belts are radially stacked, e.g., on top of one another.

In still another preferred embodiment, the n first strip ends are arranged with equal or essentially equal circumferential distances along a circumferential direction of the tire. Essentially equal circumferential distance shall mean herein a distance of +/- 3 cm (or, preferably, of +/- 1 cm). Preferably, such a distance is measured between circumferential centers of two circumferentially neighboring strip ends.

In still another preferred embodiment, each ply strip of the n ply strips has a width within a range of 0.5 cm to 2.5 cm and comprises from 1 to 6 elongated reinforcement elements, preferably in the form of brass coated steel cords.

In still another preferred embodiment, each ply strip of the n ply strips is wound with at least one 360° winding about the axis of rotation of the tire. Optionally, each ply strip of the n ply strips is wound with at least two 360° windings about the axis of rotation of the tire. As mentioned already above, this shall not be understood as being only limited to full multiples of 360° windings.

In still another preferred embodiment, each ply strip of the n ply strips has a second strip end located at a second lateral side (or edge) of the at least one of the belts, wherein the second lateral side (or edge) is axially opposite to the first lateral side. Thus, in other words, the n ply strips have n second strip ends, or each strip of the n ply strips has a first strip end and a second strip end.

In still another preferred embodiment, the second strip ends of the n ply strips are one or more of staggered along a circumferential direction; spaced apart along a circumferential direction of the tire; and arranged with essentially equal circumferential distances along a circumferential direction of the tire. Preferably, the circumferential distances along the circumferential direction for the second strip ends are the same distances as the distance of the first ends.

In still another preferred embodiment, distances between circumferentially neighboring strip ends, e.g., at one lateral of the at least one of the belts, are at least 10 cm.

In still another preferred embodiment, n is an integer within a range of 4 to 20, preferably 8 to 20, or 8 to 16.

In still another preferred embodiment, said first strip ends are distributed along the circumferential direction with circumferential angular distances according to 360°/n (or, in other words, 360° divided by n) +/- 5° (or, preferably, +/- 2°). Thus, in a preferred example of n = 8 ply strips 360° / 8 = 45°, results in the provision of one ply strip end every 45° +/- 5° (or, preferably, +/- 2°).

In still another preferred embodiment, ply strips extend parallel to one another. Such a parallel winding does not necessarily exclude that the strip ends of the ply strip have different orientations.

In still another preferred embodiment, an axial distance (or, in other words, a winding pitch) between two axially neighboring windings of one (or the same) ply strip of the n ply strips is at least 2 strip widths, and/or at most 6 strip widths. The axial distance between two axially neighboring windings of one ply strip is measured between the two axial centers of the two neighboring windings of the strip.

In still another preferred embodiment, each of the n ply strips is spirally wound about an axis of rotation of the tire with an angle of at most 15°, preferably of at most 14°, with a circumferential direction of the tire (or, in other words, between the elongated extension or length of each of the n ply strips and a circumferential direction of the tire). Optionally, said angle is within a range of 1° to 15°, preferably of 2° to 14°, or even more preferably of 4° to 14°, or of 6° to 14°, or of 6° to 9°.

It is emphasized that embodiments and/or features of one of the abovementioned aspects may also be embodiments and/or features of another one of the abovementioned aspects. Moreover, multiple embodiments or features thereof may be combined with one another.

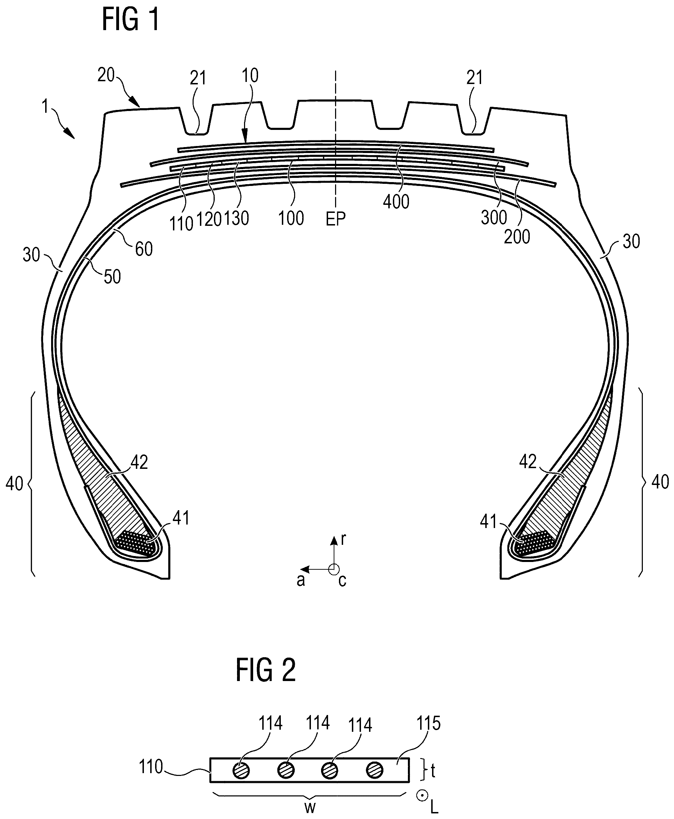

Figure 1 is a schematic cross-section of a pneumatic truck tire 1 which comprises a pair of bead portions 40, a pair of sidewalls 30 and a tread portion 20 having multiple circumferential grooves 21. Each bead portion 40 of both axially opposite bead portions 40 comprises a bead 41 and a bead apex 42, wherein each sidewall 30 extends between the tread portion 20 and a respective one of the pair of bead portions 40. Furthermore, the tire 1 comprises a carcass ply 50 extending from one of the bead portions 40 to another one of the bead portions 40, being folded around a respective bead 41 at each lateral side of the tire 1. An innerliner 60 of the tire 1 at least partially encloses a tire cavity. Moreover, the tire 1 comprises a belt portion 10 which is arranged radially between the tread portion 20 and the carcass ply 50 in a crown region of the tire 1. The belt portion 10 comprises multiple belts 100, 200, 300, 400. In particular, the belt portion 10 comprises a pair of working belts 200, 300 and an intermediate belt 100 arranged radially between the two belts 200, 300 of the pair of working belts 200, 300. A top belt 400 is provided radially above, or in other words radially on top of, the radially outer working belt 300.

Still in accordance with the present embodiment, the intermediate belt 100 comprises multiple ply strips, including the ply strips 110, 120, 130, which are spirally wound about an axis of rotation of the tire 1, or in other words about the axial direction a. In particular, each of the separate ply strips 110, 120, 130 has a relatively low angle with the circumferential direction c of the tire 1, such as for instance within a range of 2° to less than 14°. In other words, each ply strip 110, 120, 130 has an elongated shape, or length, enclosing such an angle with the circumferential direction c of the tire 1. Further examples of ply strip arrangements and/or geometries or shapes are provided in Figures 2 to 5.

In particular, Figure 2 shows a magnified schematic cross section of a ply strip 110 already shown in Figure 1. The ply strip 110 has a width w and a thickness t and an elongated extension, in parallel to the length L of the strip 110. Furthermore, the ply strip 110 comprises elongated reinforcement elements 114 (here four of such reinforcement elements) which extend in parallel to one another through the ply strip 110. Preferably, such reinforcements 114 are cords, particularly metal, such as steel cords. These cords 114 are embedded in a rubber composition 115, or in other words in a rubber coating composition. As the cords 114 extend essentially in parallel to the length direction L of the ply strip 110, it is also possible to mention that angles as described above with reference to Figure 1 are formed between the extension of the elongated reinforcements (or cords) 114 and said circumferential direction c. The width w of the strip is measured perpendicularly to the extension of the elongated reinforcements 114, which are preferably arranged parallelly beside each other in a plane, such as in a center of the strip 110 with respect the thickness t of the strip 110.

In the present embodiment, the width w preferably ranges from 5 mm to 25 mm, and the thickness t preferably ranges from 0.5 mm to 3 mm. A length of the strip is typically larger than 0.4 m, or even larger than 1 m, such as depending on the desired tire size. A number of parallel elongated reinforcements, such as metal cords, is typically within a range of 1 to 6, preferably of 2 to 5. Coating rubber compositions, or elastomer compositions, for ply strips and/or belts (or, in other words belt plies), are known as such in the tire art. With respect to cord materials, steel such as brass coated steel, is preferred. However, in principle also single wires are possible. Textile cords are another option.

The axial direction a, the circumferential direction c and the radial direction r, as well as the equatorial plane EP, are indicated for the sake of better comprehensibility in Figure 1 and other Figures herein, where appropriate. The axial direction a is parallel to the axis of rotation of the tire. The circumferential direction c is parallel to the circumference of the tire and the radial direction r is perpendicular to the axial direction a and the circumferential direction c. It is emphasized that each of these directions can have different orientations so that mentioning one of these directions is not necessarily limited to a specific orientation, unless indicated otherwise herein.

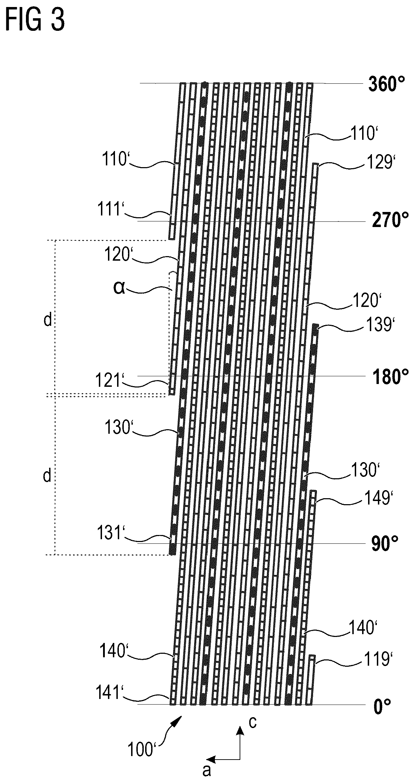

Figure 3 shows a preferred schematic arrangement, or winding pattern of ply strips 110' 120', 130', 140' in a belt 100' in accordance with another preferred embodiment of the present invention. Each of the four ply strips 110', 120', 130', 140' is spirally, or in other words helically, wound about an axis of rotation of a tire. In the present embodiment, each of the strips 110', 120', 130', 140' is wound multiple times about the axis of rotation of the tire. For the sake of better visualization, the width of the drawing corresponds to the axial extension of the belt 100', and the vertical extension of the drawing corresponds to one full circumferential extension of the tire from 0° to 360° as indicated on the right-hand side of Figure 3. For instance, the strip 110' starts with its first strip end 111' in a left-hand upper area of the drawing and extends upwards to the 360°-line and continuous further from the bottom of the drawing, i.e., from the 0°-line, again in an upper direction passing the 90°-line, the 180°-line and reaches again the 360°-line. In total, the strip 110' passes the 360°-line four times (along its continuously wound path) and ends with its second strip end 119' on a right-hand side of the drawing, or, in other words, on an axially opposite or opposite lateral side of the tire and/or belt 100'. Similarly, the ply strips 120', 130', 140' have corresponding first strip ends 121', 131', 141' starting at one lateral or axial side of the belt 100' and second strip ends 129', 139', 149' ending at an opposite lateral or axial side of the belt 100'. In particular, it is possible to describe such strips as starting at one lateral edge of the belt 100' and ending at an axially opposite edge of the belt 100'.

In the present embodiment, the strips 110', 120', 130', 140' extend with an angle α of 6° with the circumferential direction c around the tire. Preferably, such an angle is within the range of 4° to 14°, or from 6° to 9°. Moreover, strip ends located at one lateral edge of the belt 100' have preferably essentially equal circumferential distances from one another, such as indicated by the distances d in Figure 3. For instance, essentially equal means the same distances +/- 5 cm, or preferably +/-3 cm, or even more preferably +/- 1 cm. The same preferably applies to strip ends located along an axially opposite edge of the belt 100'. Moreover, the ply strips 110', 120', 130', 140' preferably extend at essentially same angles with the circumferential direction c, about the axis of rotation, preferably the same angle +/-0.5°, or +/- 0.1°. Depending on the (axial) width of the tire and/or belt, second strip ends do not necessarily end in the same circumferential or angular positions or angular sectors of the tire as the corresponding first strip ends. However, circumferential distances between circumferentially neighboring strip ends are typically the same at both axially opposite belt edges.

As further visible in Figure 3, one ply strip does not contact, or, in other words, does not directly neighbor itself along its spiral winding. In contrast, along its winding each ply strip of the strips 110', 120', 130', 140' is axially spaced from itself. However, typically, (different) axially neighboring ply strips touch each other, or they could even overlap, although axial overlap is preferably smaller than 10%, or even more preferably, smaller than 5% of the width of the ply strip. Merely for the sake of better comprehensibility of the winding pattern, directly axially neighboring ply strips 110', 120', 130', 140' are schematically shown in Figure 3 with a gap.

An axial distance (or in other words a winding pitch) between two axially neighboring windings of one (i.e., the same) strip is preferably within a range of 1 to 5 strip widths. However, such a range may vary, such as depending on the number of deployed strips, the angle with the circumferential direction, or actual tire width.

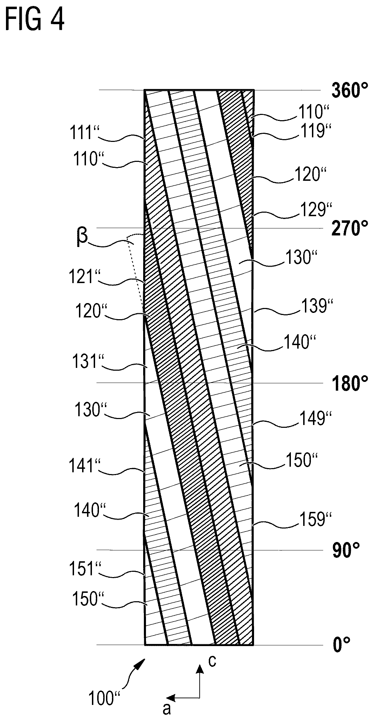

Figure 4 shows another embodiment of the present invention including a belt 100" which comprises a plurality of ply strips 110", 120", 130", 140", 150" wound about an axis of rotation of a tire with an angle β. In particular, each of the ply strips 110", 120", 130", 140", 150" is spirally or helically wound about the tire, in the present embodiment by more than one 360° revolution or winding. In alternative embodiments, it is possible that, each strip is wound with less than 360° about an axis of rotation of the tire, but preferably with at least 300°. Preferably, the width of different strips is the same. This allows easier manufacturing and allows usage of the same strip material for the belt 100". Furthermore, homogeneity of the tire properties can be improved by the use of the same strip material. A winding pitch (measured in the axial direction) of a ply strip is 4 strip widths in the present example but could also be within a range of 3 to 5 strip widths, such as depending on the degree of axial overlap, and/or the number of provided strips. As in other embodiments, shown herein, the ply strips 110", 120", 130", 140", 150" extend essentially in parallel to one another. Moreover, a single ply strip 110", 120", 130", 140", 150" does not axially contact itself along its winding path about the axis of rotation of the tire.

In the present example, each ply strip 110", 120", 130", 140", 150"has two ply strip ends 111", 119"; 121", 129"; 131", 139"; 141", 149"; and 151", and 159", respectively. In particular, one ply strip end is located at one lateral edge of the belt 100" and a second respective strip end is located at an axially opposite lateral edge of the belt 100". In the present embodiment, each ply strip has essentially a parallelogram shape with two parallel long sides, extending along the length of the strip, and two parallel short sides extending essentially in parallel to the circumferential direction of the belt 100" and/or tire. Furthermore, the ply strips 110", 120", 130", 140", 150", or in other words, the long sides of their parallelogram shapes, have an angle β with the circumferential direction c, which is in the present embodiment 12°, but can preferably also be within a range of 6° to 14°.

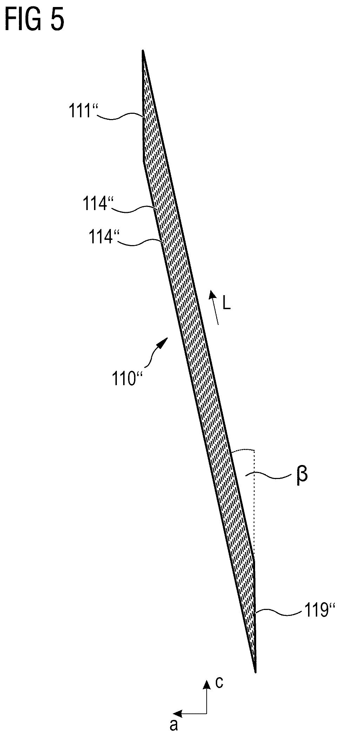

Figure 5 shows one full strip, i.e. the ply strip 110" already indicated in Figure 4. This ply strip 110" has two opposite strip ends 111" and 119", which are oppositely arranged with respect to its length L. Moreover, it has the angle β with the circumferential direction c of the tire when wound about an axis of rotation of the tire. Furthermore, a plurality of parallel cords 114" are indicated in the partially transparent view of Figure 5. These cords 114" extend in parallel to the length L of the ply strip 110" and/or have also the angle β with the circumferential direction c of the tire. As already mentioned, the strip 110" has a parallelogram shape with two parallel short sides (extending in the circumferential direction c) and two parallel long sides (extending along the length L of the strip, and/or with the angle β with respect to the circumferential direction c). A total axial width of the strip, measured in parallel to the axial direction a, preferably corresponds to the total axial width of the belt, such as the intermediate belt.

It is again emphasized that features of the embodiments described herein may be combined with one another.

The present invention, and/or its embodiments, provide an advanced belt portion comprising a belt with multiple ply strips wound about an axis of rotation of the tire, such as at relatively low angles. Such a belt helps to improve durability of the tire, such as by reducing the forces at the belt edges, particularly compared to belts made of a single ply strip. In particular, multiple strips starting at a belt edge help to distribute loads and forces to multiple strips and their elongated reinforcements, thereby improving the durability of the tire over tire life cycle. Moreover, the application of multiple ply strips helps to avoid potential nonuniformities and or potential voids. Furthermore, the application of multiple ply strips starting at a belt edge allows larger angles compared with almost 0° strips which helps to increase the durability of a respective, single strip and, particularly, the durability of cord reinforcements in such as strip.

## Claims

1. A tire comprising a circumferentially extending tread portion (20) and a belt portion (10) arranged radially inwards the tread portion (20), wherein the belt portion (10) comprises at least one belt (100) formed by a plurality of ply strips (110, 120, 130), wherein:
(i) at least one of the ply strips (110, 120, 130) has a different starting point in the circumferential direction of the tire (1) than any other of the ply strips (110, 120, 130); and/or
(ii) each of the ply strips (110, 120, 130) has a staggered starting point in the circumferential direction of the tire (1) with respect to the other ply strips (110, 120, 130), preferably a staggered starting point at a first angular increment; and/or
(iii) each of the ply strips (110, 120, 130) is spirally wound about an axis of rotation of the tire (1) and each of the ply strips (110, 120, 130) has a first end, each of said first ends being staggered along a circumferential direction of the tire (1) and spaced apart from each other.

2. The tire of claim 1 wherein each of the ply strips (110, 120, 130) has a starting point in the circumferential direction of the tire (1) different from any other of the ply strips (110, 120, 130).

3. The tire of claim 1 or 2, wherein each of the ply strips (110, 120, 130) has a respective starting point, wherein at least one of the starting points is on the lateral end of the belt (100).

4. The tire of at least one of the previous claims, wherein each of the ply strips (110, 120, 130) has a respective starting point, and wherein the respective starting points are equidistant from each other.

5. The tire of at least one of the previous claims, wherein each ply strip of the plurality of ply strips (110, 120, 130) has an angle with a circumferential direction of the tire (1) within a range of from 1° to 15° or from 2° to 14° or from 6° to 14°.

6. The tire of at least one of the previous claims, wherein each ply strip of the plurality of ply strips (110, 120, 130) has an axial width within a range of from 0.5 cm to 10 cm or from 1 cm to 5 cm.

7. The tire of at least one of the previous claims, wherein each ply strip is spirally wound from a first lateral end of the belt (100) to a second lateral end.

8. The tire of at least one of the previous claims, wherein each ply strip (110, 120, 130) is spirally wound forming a plurality of windings, wherein the windings are axially spaced apart from each other.

9. The tire of at least one of the previous claims, wherein each ply strip of the plurality of ply strips (110, 120, 130) extends from a first lateral edge of the at least one of the belts (100) to a second lateral edge.

10. The tire of at least one of the previous claims, wherein the first angular increment is 45 degrees or is 90 degrees.

11. The tire of at least one of the previous claims, wherein the staggered starting points of a first set of ply strips (110, 120, 130) are located on a lateral edge of the belt (100).

12. The tire of at least one of the previous claims, wherein the first ends are staggered from each other in equal increments.

13. The tire of at least one of the previous claims, wherein the first ends are staggered from each other in the range of 45 to 90 degrees in the circumferential direction.

14. The tire of at least one of the previous claims, wherein the first ends are staggered in the axial direction.

15. The tire of at least one of the previous claims, wherein each of the ply strips (110, 120, 130) is spirally wound forming a plurality of windings, wherein the windings are axially spaced apart.
